# EUROPÄISCHE PATENTSCHRIFT

(11) **EP 2 838 315 B1**
(45) Veröffentlichungstag und Bekanntmachung des Hinweises auf die Patenterteilung: **13.12.2017**
(21) Anmeldenummer: 13382391.4
(22) Anmeldetag: 04.10.2013
(51) Int. Cl.: H05B 6/12

(54) **Induktionsheizeinheit**
Induction heating unit
Unité de chauffage à induction

(30) Priorität: 12.07.2013 ES 201331063
(43) Veröffentlichungstag der Anmeldung: 18.02.2015
(73) Patentinhaber: BSH Hausgeräte GmbH, 81739 München (DE)
(72) Erfinder: Aranda Vázquez, Sandra, Zaragoza (ES); Diez Esteban, Cristina, Zaragoza (ES); Hernández Blasco, Pablo Jesús, Zaragoza (ES); Lope Moratilla, Ignacio, Zaragoza (ES); Moya Albertín, María Elena, Zaragoza (ES)
(74) Vertreter: Gesthüsen, Thomas

(56) Entgegenhaltungen:
- DE-A1- 2 806 825
- DE-A1-102007 037 881
- FR-A1- 2 971 910
- US-A- 4 296 295

## Beschreibung

Die Erfindung geht aus von einer Induktionsheizeinheit nach dem Oberbegriff des Anspruchs 1.

Es ist bereits eine Induktionsheizeinheit, und zwar eine Induktionskochfeldheizeinheit, mit einer Induktionsheizleitung, die zu einer Spule gewickelt ist, bekannt. Die Induktionsheizeinheit umfasst einen Spulenabschnitt, in dem Wicklungsabstände der Induktionsheizleitung konstant sind.

Aus der deutschen Offenlegungsschrift DE 28 06 825 A1 ist bereits eine Kochfeldplatte mit einer Induktionsheizung mit unterhalb der Herdplatte angeordneten Induktionswicklungen bekannt, die spiralförmig nebeneinander angeordnete Leiterwindungen aufweisen. Abstände werden zwischen den einzelnen Leiterwindungen vom Zentrum der Spirale aus bis zum Spiralenrand hin kleiner.

Die französische Patentanmeldung FR 2 971 910 A1 offenbart einen Induktionsherd, der einen Induktor umfasst. Der Induktor umfasst einen in Form einer ebenen Spirale aufgerollten Leiter, wobei die Spirale des Leiters Windungsabschnitte umfasst und eine Vielzahl der Windungsabschnitte jeweils mehrere um einen konstanten Windungsschritt beabstandete Windungen aufweist, wobei der konstante Windungsschritt eines Windungsabschnitts in Bezug auf zumindest einen anderen Windungsabschnitt variabel ist. Innere und äußere Windungsabschnitte, die jeweils im mittleren Bereich des Induktors und in der Peripherie des Induktors angeordnet sind, weisen eine Vielzahl von um einen konstanten Windungsschritt beabstandeten Windungen auf, wobei unterhalb des jeweiligen konstanten Windungsschritts einer Vielzahl von mittleren Windungsabschnitten diese mittleren Windungsabschnitte zwischen den inneren bzw. äußeren Windungsabschnitten angeordnet sind.

Die US-amerikanische Patentanmeldung US 4 296 295 A offenbart eine ebene Induktionsheizspule für ein Kochgerät des Typs, bei dem ein elektrisch leitendes Kochgeschirr gemäß dem Prinzip der elektromagnetischen Induktion erwärmt wird. Um eine im Wesentlichen gleichförmige Verteilung der magnetischen Flussdichte in der einen Teil des Kochgeräts bildenden Induktionsspule bereitzustellen und dadurch eine gleichmäßige Temperaturverteilung über den Boden des Kochgeschirrs zu erreichen, ist ein hitzebeständiges Isolationsmaterial direkt um innere Windungen der Spule gewickelt, um für die inneren Windungen einen relativ höheren Gewindegang zu erreichen als für die äußeren Windungen.

Aus der deutschen Offenlegungsschrift DE 10 2007 037881 A1 ist bereits eine Induktorvorrichtung mit einer Induktoreinheit bekannt, die ein erstes und zumindest ein zweites Bauteil aufweist. Die Induktorvorrichtung weist eine Kodierungseinheit auf, die dazu vorgesehen ist, eine Montageorientierung des zweiten Bauteils relativ zum ersten Bauteil bei einer Montage der Induktoreinheit vorzugeben.

Die Aufgabe der Erfindung besteht insbesondere darin, eine gattungsgemäße Einheit mit vorteilhaften Heizeigenschaften bereitzustellen. Die Aufgabe wird erfindungsgemäß durch die Merkmale des Patentanspruchs 1 und des Verfahrensanspruchs 10 gelöst, während vorteilhafte Ausgestaltungen und Weiterbildungen der Erfindung den Unteransprüchen entnommen werden können.

Die Erfindung geht aus von einer Induktionsheizeinheit, insbesondere einer Induktionskochfeldheizeinheit, mit zumindest einer Induktionsheizleitung, die zu einer Spule, insbesondere einer Flachspule, gewickelt ist.

Wicklungsabstände der zumindest einen Induktionsheizleitung nehmen in zumindest einem Spulenabschnitt von innen nach außen hin sukzessive, und zwar kontinuierlich, ab. Unter einer "Induktionsheizleitung" soll eine elektrische Leitung verstanden werden, die dazu vorgesehen ist, einen elektrischen Strom zu führen, der dazu vorgesehen ist, in einem geeigneten Gargeschirr Induktionseffekte hervorzurufen. Insbesondere ist die Induktionsheizleitung dazu vorgesehen, zumindest in einem Betriebszustand von hochfrequentem Wechselstrom, insbesondere mit einer Frequenz von zumindest 1 kHz, insbesondere von zumindest 3 kHz, vorteilhaft von zumindest 10 kHz und besonders vorteilhaft von zumindest 20 kHz und insbesondere von maximal 100 kHz durchflossen zu werden. Vorzugsweise weist der zu einem Betrieb der zumindest einen Induktionsheizleitung vorgesehene hochfrequente Wechselstrom eine maximale Stromstärke von zumindest 0,5 A, insbesondere zumindest 1 A, vorteilhaft zumindest 3 A und vorzugsweise zumindest 10 A auf. Vorzugsweise ist die Induktionsheizleitung von einer Litzenleitung, mit vorteilhaft gegeneinander isolierten und besonders vorteilhaft miteinander verdrillten Einzeladern, gebildet, insbesondere um eine hohe Effizienz zu erreichen. Insbesondere ist die Induktionsheizleitung in zumindest einem Betriebszustand dazu vorgesehen, eine durch den hochfrequenten Wechselstrom bereitgestellte Heizleistung von zumindest 100 W, insbesondere zumindest 300 W, vorteilhaft zumindest 1000 W, vorzugsweise zumindest 2000 W in ein magnetisches Wechselfeld zu wandeln. Insbesondere ist das magnetische Wechselfeld wiederum dazu vorgesehen, in einem Gargeschirr, insbesondere einem Gargeschirrboden, durch Wirbelstromeffekte und/oder Ummagnetisierungseffekte in Wärme umgewandelt zu werden. Insbesondere ist die Induktionsheizleitung aus Kupfer und/oder Aluminium ausgebildet. Alternativ sind weitere, einem Fachmann als sinnvoll erscheinende Materialien denkbar. Unter einer "Spule" soll ein induktives Bauelement mit zumindest einer insbesondere bestimmten Induktivität verstanden werden. Insbesondere ist die Spule zumindest im Wesentlichen in Form einer Kreisscheibe, alternativ in Form eines Ovals oder eines Rechtecks, ausgebildet. Insbesondere weist die Spule zumindest fünf, insbesondere zumindest zehn, vorteilhaft zumindest fünfzehn, bevorzugt zumindest zwanzig Wicklungen der Induktionsheizleitung auf. Vorzugsweise sind Wicklungen zumindest eines Spulenabschnitts in einer Ebene angeordnet. Alternativ ist es denkbar, dass Wicklungen zumindest eines Spulenabschnitts in mehreren Ebenen angeordnet sind. Insbesondere umfasst die Induktionsheizeinheit zumindest einen Spulenträger, der dazu vorgesehen ist, zumindest in einer Einbaulage die Induktionsheizleitung zu tragen. Vorzugsweise weist der Spulenträger zumindest ein Spulenzentrum auf, um das die Induktionsheizleitung zumindest in montiertem Zustand zu einer Spule gewickelt ist. Besonders vorteilhaft weist die Induktionsheizleitung zumindest ein inneres Spulenende und zumindest ein äußeres Spulenende, insbesondere genau ein inneres Spulenende und genau ein äußeres Spulenende, auf. Unter einem "inneren" und einem "äußeren" Spulenende sollen zwei Enden der Induktionsheizleitung verstanden werden, die auf dem Spulenträger angeordnet sind, wobei das innere Spulenende bezüglich zumindest einer radialen Richtung insbesondere einen geringeren Abstand zu dem Spulenzentrum aufweist als das äußere Spulenende. Insbesondere sind das innere und das äußere Spulenende jeweils an zumindest ein Leitungselement, insbesondere an zumindest einen Draht, angeschlossen, insbesondere zu einer Versorgung der Induktionsheizleitung mit elektrischem Strom. Unter einer "Wicklung" der Induktionsheizleitung soll ein Abschnitt der Induktionsheizleitung verstanden werden, der bezüglich zumindest einer Achse, die vorteilhaft das Spulenzentrum schneidet, jeden Winkelteilbereich um die Achse, insbesondere jeweils genau einmal, belegt. Insbesondere ist die Achse zumindest im Wesentlichen senkrecht zu einer Haupterstreckungsebene des Spulenträgers und/oder zu der Spule, insbesondere einer Spulenhauptfläche, ausgerichtet. Unter einem "Sputenträger" soll eine Einheit verstanden werden, die dazu vorgesehen ist, die Induktionsheizleitung in Form und/oder Position zu halten. Insbesondere ist der Spulenträger von einem isolierenden, vorteilhaft zumindest teilweise flexiblen Material gebildet. Insbesondere ist der Spulenträger zumindest teilweise aus Kunststoff gebildet. Alternativ und/oder zusätzlich könnte der Spulenträger zumindest teilweise aus Keramik gebildet sein. Unter einem "Spulenzentrum" soll ein Mittelpunkt und/oder ein Schwerpunkt des Spulenträgers verstanden werden. Vorzugsweise ist die Induktionsheizleitung um das Spulenzentrum gewickelt. Vorzugsweise ist das Spulenzentrum zumindest in montiertem Zustand zumindest von dem Spulenabschnitt umgeben. Vorzugsweise ist das Spulenzentrum zumindest im Wesentlichen auch ein Mittelpunkt und/oder ein Schwerpunkt der Induktionsheizeinheit. Unter der Wendung, dass eine Gerade und/oder Ebene "zumindest im Wesentlichen senkrecht" zu einer weiteren, von der einen Gerade und/oder Ebene getrennt ausgebildeten Gerade und/oder Ebene ausgerichtet ist, soll verstanden werden, dass die Gerade und/oder Ebene mit der weiteren Gerade und/oder Ebene bei einer Projektion auf zumindest eine Projektionsebene, in der zumindest eine der Geraden und/oder eine der Ebenen angeordnet ist, einen Winkel einschließt, der vorzugsweise um weniger als 15°, vorteilhaft um weniger als 10° und insbesondere um weniger als 5° von einem Winkel von 90° abweicht. Unter "zumindest einem" Spulenabschnitt soll genau ein Spulenabschnitt und/oder zumindest zwei Spulenabschnitte verstanden werden. Unter "genau einem" Spulenabschnitt soll verstanden werden, dass zumindest im Wesentlichen alle Wicklungen der Induktionsheizleitung in dem Spulenabschnitt angeordnet sind. Unter "zwei" Spulenabschnitten soll verstanden werden, dass zumindest im Wesentlichen alle Wicklungen der Induktionsheizleitung auf die zwei Spulenabschnitte verteilt sind, wobei jeder Spulenabschnitt zumindest vier Wicklungen umfasst. Unter einem "Spulenabschnitt" soll ein Teilbereich der Spule verstanden werden, in welchem zumindest vier, vorteilhaft zumindest sechs, besonders vorteilhaft zumindest acht, vorzugsweise zumindest zehn, insbesondere direkt, aufeinander folgende Wicklungen der Induktionsheizleitung angeordnet sind. Unter zwei "aufeinander folgende" Wicklungen der Induktionsheizleitung sollen zwei Wicklungen der Induktionsheizleitung verstanden werden, die bezüglich der radialen Richtung nächste Nachbarn darstellen. Unter einer "radialen Richtung" soll eine Richtung verstanden werden, die sich ausgehend von dem Spulenzentrum zumindest im Wesentlichen parallel zu der Haupterstreckungsebene erstreckt. Insbesondere erstreckt sich eine erste radiale Richtung ausgehend von dem Spulenzentrum in Richtung des äußeren Spulenendes. Insbesondere erstreckt sich eine zweite radiale Richtung ausgehend von dem Spulenzentrum in Richtung des inneren Spulenendes. Unter einem "Wicklungsabstand" soll eine Breite eines Raums zwischen zwei benachbart angeordneten Wicklungen der Induktionsheizleitung verstanden werden. Insbesondere soll unter einem Wicklungsabstand eine zumindest im Wesentlichen parallel zu der radialen Richtung ausgerichtete Erstreckung zwischen zwei benachbart angeordneten Wicklungen der Induktionsheizleitung verstanden werden. Unter der Wendung, dass eine Gerade und/oder Ebene "zumindest im Wesentlichen parallel" zu einer weiteren, von der einen Gerade und/oder Ebene getrennt ausgebildeten Gerade und/oder Ebene ausgerichtet ist, soll verstanden werden, dass die Gerade und/oder Ebene mit der weiteren Geraden und/oder Ebene einen Winkel einschließt, der vorzugsweise um weniger als 15°, vorteilhaft um weniger als 10° und insbesondere um weniger als 5° von einem Winkel von 0° abweicht. Unter "innen" soll insbesondere bezüglich der radialen Richtung dem Spulenzentrum zugewandt verstanden werden. Unter "außen" soll bezüglich der radialen Richtung dem Spulenzentrum abgewandt verstanden werden. Unter "sukzessive" soll kontinuierlich und/oder monoton und/oder eine Erstreckung, insbesondere eine Ausdehnung, über zumindest drei Wicklungen der Induktionsheizleitung verstanden werden. Unter "vorgesehen" soll speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung können vorteilhafte Heizeigenschaften erzielt werden. Insbesondere kann eine gleichmäßige Wärmeverteilung und/oder eine geringe Verlustleistung und/oder eine hohe Effizienz erreicht werden. Vorteilhaft kann eine lange Kochzeit mit maximal anforderbarer Heizleistung vor einer Notabschaltung aufgrund einer Überhitzung erreicht werden. Ferner kann vorteilhaft eine geringe Temperatur des Spulenabschnitts und/oder eine geringere Temperatur der Induktionsheizeinheit erreicht werden, wodurch vorteilhaft eine geringe Materialanforderung und/oder geringe Material- und/oder Produktionskosten erreicht werden können. Ferner kann vorteilhaft eine langlebige Induktionsheizeinheit erreicht werden. Des Weiteren können geringe Induktionsverluste und/oder geringe Proximity-Verluste in dem Spulenabschnitt erreicht werden, insbesondere bei Induktionsheizeinheiten mit geringem Durchmesser. Darüber hinaus können ungewollt hohe Temperaturen in einem Nahbereich des Spulenzentrums vermieden werden. Insbesondere ist eine kurze Induktionsheizleitung ausreichend zu einer Wicklung einer großen Spule, wodurch insbesondere ein geringes Gewicht der Spule erreicht werden kann.

Insbesondere ist denkbar, dass Wicklungsabstände der Induktionsheizleitung in dem Spulenabschnitt von innen nach außen hin linear abnehmen. Ebenfalls denkbar ist, dass Wicklungsabstände der Induktionsheizleitung in dem Spulenabschnitt von innen nach außen hin stufenförmig abnehmen, insbesondere mit von innen nach außen kleiner werdenden Stufenschritten. Alternativ sind weitere, einem Fachmann als sinnvoll erscheinende Abhängigkeiten und/oder Verläufe denkbar. Insbesondere können für verschiedene Durchmesser von Induktionsheizeinheiten verschiedene Abhängigkeiten verwendet werden. Vorteilhaft nehmen Wicklungsabstände der zumindest einen Induktionsheizleitung in dem zumindest einen Spulenabschnitt von innen nach außen hin exponentiell ab, wodurch insbesondere eine besonders hohe Effizienz und/oder Flexibilität erreicht werden kann.

Zudem wird vorgeschlagen, dass ein Wicklungsabstand zweier aufeinander folgender innerster Wicklungen des zumindest einen Spulenabschnitts zumindest 0,5 mm, insbesondere zumindest 0,7 mm, vorteilhaft zumindest 1 mm und besonders vorteilhaft zumindest 1,2 mm beträgt. Vorzugsweise beträgt ein Wicklungsabstand zweier aufeinander folgender innerster Wicklungen des Spulenabschnitts maximal 5 mm, insbesondere maximal 4,5 mm und vorteilhaft maximal 4 mm. Dadurch können insbesondere geringe Kosten und/oder eine hohe Effizienz erreicht werden.

Weiterhin wird vorgeschlagen, dass die Induktionsheizeinheit zumindest einen Spulenträger umfasst, der zumindest einen Wicklungsabstand der zumindest einen Induktionsheizleitung definiert. Insbesondere ist der Wicklungsabstand durch eine Form des Spulenträgers definiert, insbesondere festgelegt. Dadurch kann vorteilhaft die Induktionsheizleitung in einfacher Weise präzise zu einer Spule gewickelt werden, wodurch geringe Produktionskosten erreicht werden können. Zudem kann vorteilhaft eine Aufwicklung der Induktionsheizleitung zu einer Spule automatisiert werden, wodurch eine schnelle Herstellung der Induktionsheizeinheit erreicht werden kann.

Ferner wird vorgeschlagen, dass der zumindest eine Spulenträger zumindest eine Führungseinheit zu einer Führung zumindest des zumindest einen Spulenabschnitts aufweist. Insbesondere bildet die Führungseinheit zumindest eine Führungsstrecke aus, entlang der die Induktionsheizleitung in dem Spulenabschnitt geführt ist. Vorzugsweise weist die Führungseinheit zumindest eine zumindest im Wesentlichen kontinuierliche Führungsnut auf, die die Führungsstrecke definiert, insbesondere ausbildet. Unter einer "zumindest im Wesentlichen kontinuierlichen" Führungsnut soll eine Führungsnut verstanden werden, die sich über einen Anteil von mehr als 50 %, insbesondere von mehr als 60 %, vorteilhaft von mehr als 70 %, besonders vorteilhaft von mehr als 80 % und vorzugsweise von mehr als 90 % eines beliebigen Teilabschnitts der Induktionsheizleitung zumindest in dem Spulenabschnitt erstreckt, wobei der Teilabschnitt insbesondere eine Länge in einem Bereich zwischen 3 cm und 6 cm aufweist. Unter einer zumindest im Wesentlichen kontinuierlichen "Führungsnut" soll ein Teilbereich der Führungseinheit verstanden werden, der in dem beliebigen Teilabschnitt der Induktionsheizleitung bezüglich der radialen Richtung zumindest eine einseitige, insbesondere wenigstens eine zweiseitige, seitliche Begrenzung der Induktionsheizleitung ausbildet, an der die Induktionsheizleitung anliegt. Insbesondere bildet die zumindest im Wesentlichen kontinuierliche Führungsnut in dem beliebigen Teilabschnitt der Induktionsheizleitung bezüglich der radialen Richtung eine äußere und/oder eine innere seitliche Begrenzung der Induktionsheizleitung aus. Alternativ zu einer durchgehenden Führungseinheit ist eine punktuelle Führungseinheit denkbar, wobei die Induktionsheizleitung in diesem Fall insbesondere polygonartig geführt ist. Alternativ zu einem Spulenträger mit zumindest einer Führungseinheit sind weitere, einem Fachmann als sinnvoll erscheinende Ausgestaltungen des Spulenträgers denkbar. Dadurch kann vorteilhaft eine definierte Position des Spulenabschnitts erreicht werden. Zudem kann vorteilhaft auf einen fehleranfälligen Produktionsschritt, bei dem eine, auf einer separaten Wickelvorrichtung gewickelte Spule auf einen Spulenträger übertragen wird, verzichtet werden.

Insbesondere kann ein inneres Spulenende der zumindest einen Induktionsheizleitung zu dem Spulenzentrum um eine Strecke von weniger als 0,8 cm, vorteilhaft von weniger als 0,5 cm, vorzugsweise von weniger als 0,3 cm und besonders vorteilhaft von weniger als 0,1 cm beabstandet angeordnet sein. Vorteilhaft ist das innere Spulenende zu einem Spulenzentrum jedoch um eine Strecke von mehr als 1 cm, insbesondere von mehr als 1,2 cm, vorzugsweise von mehr als 1,5 cm, vorteilhaft von mehr als 2 cm und besonders vorteilhaft von mehr als 2,5 cm beabstandet angeordnet, wodurch insbesondere ungewollt hohe Temperaturen in einem Nahbereich des Spulenzentrums vermieden werden können.

In einer weiteren nicht erfindungsgemäßen Ausgestaltung könnten über zumindest im Wesentlichen alle Wicklungen der zumindest einen Induktionsheizleitung Wicklungsabstände der zumindest einen Induktionsheizleitung von innen nach außen hin sukzessive abnehmen. Unter "zumindest im Wesentlichen allen" Wicklungen der Induktionsheizleitung sollen alle Wicklungen bis auf eine Anzahl von maximal vier verbleibenden Wicklungen, insbesondere von maximal drei verbleibenden Wicklungen, vorteilhaft von maximal zwei verbleibenden Wicklungen, besonders vorteilhaft von maximal einer Wicklung verstanden werden, wobei maximal drei der verbleibenden Wicklungen, insbesondere direkt, benachbart angeordnet sind. Insbesondere ist eine Länge der Induktionsheizleitung von maximal 10 %, insbesondere von maximal 8 %, vorteilhaft von maximal 5 %, besonders vorteilhaft von maximal 3 % in den maximal vier verbleibenden Wicklungen angeordnet. Dadurch kann insbesondere eine gleichmäßige Wärmeverteilung und/oder eine hohe Effizienz und/oder eine gute Magnetfeldverteilung erreicht werden, insbesondere bei Induktionsheizeinheiten mit geringem Durchmesser. Die Induktionsheizeinheit umfasst zumindest einen weiteren Spulenabschnitt, in dem Wicklungsabstände der zumindest einen Induktionsheizleitung gleich sind. Insbesondere sind in dem weiteren Spulenabschnitt zumindest 10 %, insbesondere zumindest 20 % und vorteilhaft zumindest 30 % einer Gesamtlänge der Induktionsheizleitung angeordnet. Insbesondere können der Spulenabschnitt und der weitere Spulenabschnitt durch einen Übergangsbereich, der insbesondere eine Breite von zumindest 0,5 cm, insbesondere zumindest 1 cm und vorteilhaft zumindest 2 cm, aufweist, voneinander getrennt sein. Vorzugsweise weist der Übergangsbereich eine Breite von weniger als 8 cm, insbesondere weniger als 6 cm und vorteilhaft weniger als 5 cm auf. Alternativ ist eine Ausgestaltung unter Vermeidung eines Übergangsbereichs denkbar, bei welcher der Spulenabschnitt und der weitere Spulenabschnitt direkt ineinander übergehen. Insbesondere liegt in dem Übergangsbereich vorteilhaft maximal eine, insbesondere maximal eine halbe, vorzugsweise maximal eine viertel Windung der Induktionsheizleitung. Insbesondere sind Wicklungen der unterschiedlichen Spulenabschnitte in einer gleichen Ebene angeordnet. Unter "gleichen" Wicklungsabständen soll verstanden werden, dass die Wicklungsabstände aufeinander folgender Windungen kleiner sind als 50 mm, insbesondere kleiner als 40 mm, vorteilhaft kleiner als 30 mm, vorzugsweise kleiner als 20 mm. Beispielsweise könnte der weitere Spulenabschnitt dicht gewickelt sein, wobei Wicklungsabstände von aufeinander folgenden Wicklungen kleiner sind als 0,5 mm, insbesondere kleiner als 0,3 mm, vorteilhaft kleiner als 0,1 mm. Hierbei könnten bei dem dicht gewickelten weiteren Spulenabschnitt unterschiedliche, insbesondere aufeinander folgende Wicklungen aneinander anliegen. Ebenfalls denkbar ist, dass der weitere Spulenabschnitt beabstandet gewickelt ist, wobei Wicklungsabstände von aufeinander folgenden Wicklungen größer sind als 0,6 mm, insbesondere größer als 1 mm, vorteilhaft größer als 2 mm, vorzugsweise größer als 3 mm. Hierbei ist denkbar, dass bei dem beabstandet gewickelten weiteren Spulenabschnitt Wicklungsabstände aufeinander folgender Windungen kleiner sind als 20 mm, insbesondere kleiner als 15 mm, vorteilhaft kleiner als 10 mm, vorzugsweise kleiner als 5 mm. Ebenfalls denkbar ist, dass in dem weiteren Spulenabschnitt Wicklungsabstände der Induktionsheizleitung von innen nach außen hin sukzessive zunehmen, beispielsweise exponentiell und/oder linear und/oder stufenförmig. Dadurch kann insbesondere eine hohe Flexibilität erreicht werden. Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: ein erfindungsgemäßes Induktionshausgerät mit vier erfindungsgemäßen Induktionsheizeinheiten in einer schematischen Draufsicht,
- Fig. 2: eine Ausgestaltung einer nicht erfindungsgemäßen Induktionsheizeinheit in einer schematischen Draufsicht und
- Fig. 3: eine der erfindungsgemäßen Induktionsheizeinheiten aus Fig. 1 in einer schematischen Draufsicht.

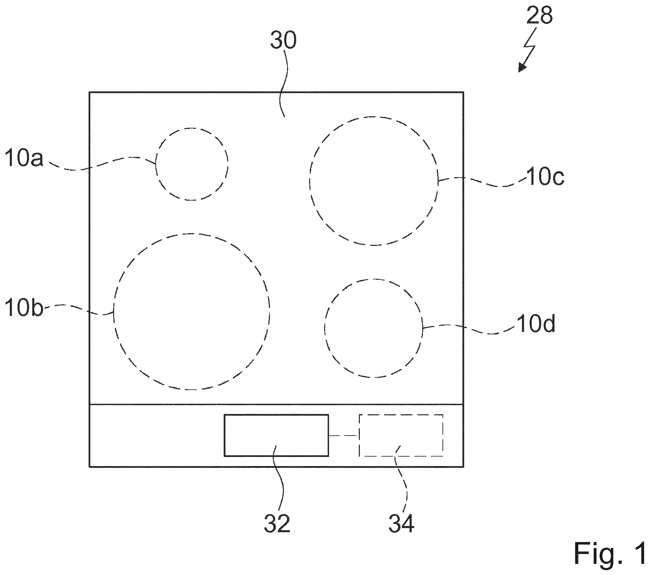

Fig. 1 zeigt ein erfindungsgemäßes Induktionshausgerät 28, das als Induktionskochfeld ausgebildet ist. Alternativ zu einer Ausbildung als Induktionskochfeld könnte das Induktionshausgerät als Backofen, Mikrowellengerät und/oder Grill ausgebildet sein. Ebenfalls denkbar sind weitere, einem Fachmann als sinnvoll erscheinende Induktionshausgeräte. Das Induktionshausgerät 28 weist einen Grundkörper 30 zu einem Aufstellen von Gargeschirren auf. Der Grundkörper 30 ist als Kochfeldplatte ausgebildet. Der Grundkörper 30 bildet eine Kochfläche aus. Das Induktionshausgerät 28 weist vier erfindungsgemäße Induktionsheizeinheiten 10a, 10b, 10c, 10d auf, die als Induktionskochfeldheizeinheiten ausgebildet sind. Die Induktionsheizeinheiten 10a, 10b, 10c, 10d sind unterhalb des Grundkörpers 30 angeordnet. Jede der Induktionsheizeinheiten 10a, 10b, 10c, 10d ist dazu vorgesehen, ein auf dem Grundkörper 30 oberhalb der Induktionsheizeinheit 10a, 10b, 10c, 10d aufgestelltes Gargeschirr zu erhitzen. Jede der Induktionsheizeinheiten 10a, 10b, 10c, 10d ist in einer Draufsicht zumindest im Wesentlichen kreisförmig ausgebildet. Jede der Induktionsheizeinheiten 10a, 10b, 10c, 10d bildet eine eigenständige Heizzone zu einem Erhitzen eines aufgestellten Gargeschirrs aus. Alternativ ist denkbar, dass die Induktionsheizeinheiten Teil eines variablen Kochflächenbereichs und/oder einer Kochfeldmatrix sind. Die Induktionsheizeinheiten 10a, 10b, 10c, 10d weisen alle unterschiedliche Durchmesser auf.

Das Induktionshausgerät 28 weist eine Bedieneinheit 32 zu einer Eingabe und/oder Auswahl von Betriebsparametern, beispielsweise einer Heizleistung und/oder einer Heizleistungsdichte und/oder einer Heizzone, auf. Die Bedieneinheit 32 ist zu einer Ausgabe eines Werts eines Betriebsparameters an einen Bediener vorgesehen. Das Induktionshausgerät 28 weist eine Steuereinheit 34 auf, die dazu vorgesehen ist, in Abhängigkeit von mittels der Bedieneinheit 32 eingegebener Betriebsparameter Aktionen auszuführen und/oder Einstellungen zu verändern.

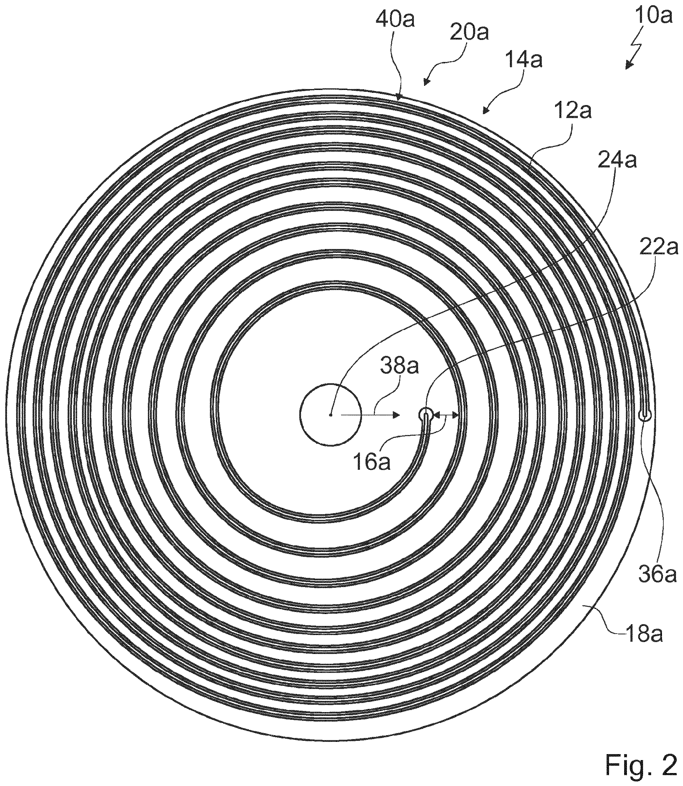

Eine nicht erfindungsgemäße erste Induktionsheizeinheit 10a weist einen kleinsten Durchmesser der Induktionsheizeinheiten 10a, 10b, 10c, 10d auf (vgl. Fig. 2). Die erste Induktionsheizeinheit 10a umfasst eine Induktionsheizleitung 12a, die zu einer Spule gewickelt ist. Die Induktionsheizleitung 12a ist um ein Spulenzentrum 24a zu einer Spule gewickelt. Die Induktionsheizleitung 12a weist ein inneres Spulenende 22a und eine äußeres Spulenende 36a auf. Die erste Induktionsheizeinheit 10a umfasst einen Spulenabschnitt 14a. In dem Spulenabschnitt 14a nehmen Wicklungsabstände 16a der Induktionsheizleitung 12a von innen nach außen hin sukzessive ab. Wicklungsabstände 16a der Induktionsheizleitung 12a nehmen in dem Spulenabschnitt 14a von innen nach außen hin exponentiell ab. Wicklungsabstände 16a der Induktionsheizleitung 12a sind ausgehend von dem Spulenzentrum 24a in radialer Richtung 38a nach außen hin gemessen.

Das innere Spulenende 22a der Induktionsheizleitung 12a ist zu dem Spulenzentrum 24a um eine Strecke von im Wesentlichen 2 cm beabstandet angeordnet. Alternativ ist denkbar, dass das innere Spulenende im Wesentlichen in dem Spulenzentrum angeordnet ist, wobei die Induktionsheizleitung ausgehend von dem Spulenzentrum zu einer Spule gewickelt ist. Ein Wicklungsabstand 16a zweier aufeinander folgender innerster Wicklungen des Spulenabschnitts 14a beträgt im Wesentlichen 0,7 mm. Ausgehend von dem inneren Spulenende 22a nehmen in dem Spulenabschnitt 14a Wicklungsabstände 16a der Induktionsheizleitung 12a in radialer Richtung 38a von innen nach außen hin sukzessive ab. Der Spulenabschnitt 14a ist als Einzelspulenabschnitt ausgebildet. Wicklungsabstände 16a der Induktionsheizleitung 12a nehmen über im Wesentlichen alle Wicklungen der Induktionsheizleitung 12a von innen nach außen hin sukzessive ab.

Die erste Induktionsheizeinheit 10a umfasst einen Spulenträger 18a, der Wicklungsabstände 16a der Induktionsheizleitung 12a definiert. Die Induktionsheizleitung 12a ist in montiertem Zustand über im Wesentlichen eine gesamte Länge der Induktionsheizleitung 12a auf dem Spulenträger 18a angeordnet. Der Spulenträger 18a ist als ein einstückiges Bauteil ausgebildet. Der Spulenträger 18a ist als ein massives Bauteil ausgebildet. Der Spulenträger 18a weist eine Führungseinheit 20a zu einer Führung des Spulenabschnitts 14a auf. Die Führungseinheit 20a definiert Wicklungsabstände 16a der Induktionsheizleitung 12a. Die Führungseinheit 20a erstreckt sich ausgehend von dem Spulenzentrum 24a in radialer Richtung 38a. Die Führungseinheit 20a umgibt das Spulenzentrum 24a und definiert eine Führungsstrecke, entlang der die Induktionsheizleitung 12a geführt ist. Die Führungseinheit 20a weist eine im Wesentlichen kontinuierliche Führungsnut 40a auf, die die Führungsstrecke definiert. Ausgehend von dem Spulenzentrum 24a erstreckt sich die Führungsnut 40a im Wesentlichen spiralförmig um das Spulenzentrum 24a.

In einem Verfahren zur Herstellung der ersten Induktionsheizeinheit 10a wird die Induktionsheizleitung 12a zu der Spule gewickelt, wobei in dem Spulenabschnitt 14a Wicklungsabstände 16a der Induktionsheizleitung 12a von innen nach außen hin sukzessive abnehmen. Die Induktionsheizleitung 12a wird in dem Spulenabschnitt 14a in die Führungsnut 40a gelegt. Die Induktionsheizleitung 12a wird in einem durchgängigen, automatisierten Verfahren zu einer Spule gewickelt. Die Induktionsheizleitung 12a wird in einem kontinuierlichen Wicklungsschritt zu einer Spule gewickelt. Zu einer Fixierung der Induktionsheizleitung könnte der Spulenträger erhitzt werden, wodurch der Spulenträger aufschmelzen und die Induktionsheizleitung fest in Position halten könnte. Alternativ ist denkbar, dass zu einer Fixierung der Induktionsheizleitung ein Haftungsmittel, beispielsweise Silikon, verwendet wird.

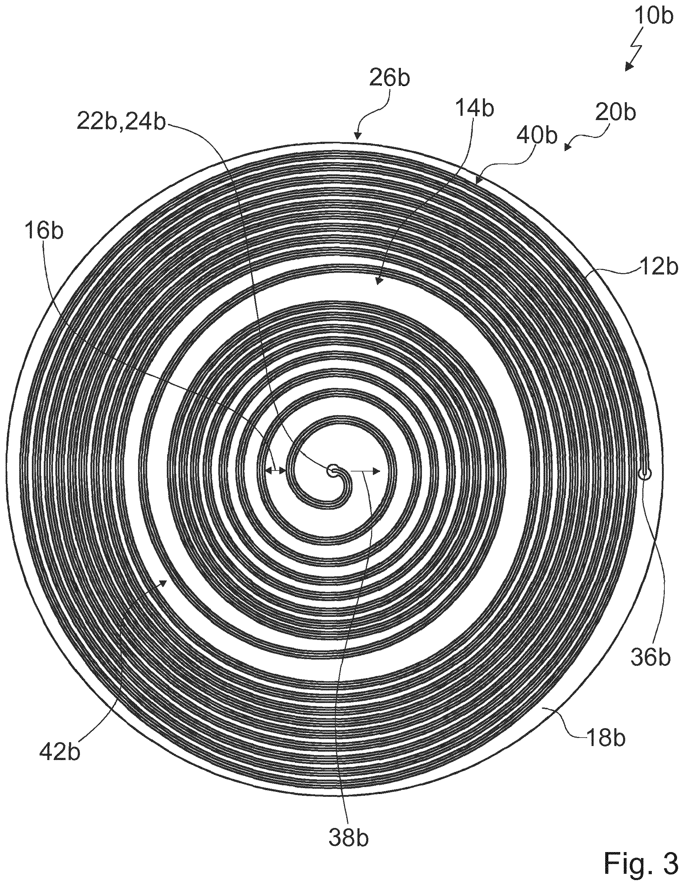

Eine zweite Induktionsheizeinheit 10b weist einen größten Durchmesser der Induktionsheizeinheiten 10a, 10b, 10c, 10d auf (vgl. Fig. 3). Die zweite Induktionsheizeinheit 10b umfasst eine Induktionsheizleitung 12b, die zu einer Spule gewickelt ist. Die Induktionsheizleitung 12b ist um ein Spulenzentrum 24b zu einer Spule gewickelt. Die Induktionsheizleitung 12b weist ein inneres Spulenende 22b und eine äußeres Spulenende 36b auf. Die erste Induktionsheizeinheit 10b umfasst einen Spulenabschnitt 14b. In dem Spulenabschnitt 14b nehmen Wicklungsabstände 16b der Induktionsheizleitung 12b von innen nach außen hin sukzessive ab. Wicklungsabstände 16b der Induktionsheizleitung 12b nehmen in dem Spulenabschnitt 14b von innen nach außen hin exponentiell ab.

Das innere Spulenende 22b ist im Wesentlichen in dem Spulenzentrum 24b angeordnet. Die Induktionsheizleitung 12b ist ausgehend von dem Spulenzentrum 24b zu einer Spule gewickelt. Alternativ ist denkbar, dass das innere Spulenende der Induktionsheizleitung zu dem Spulenzentrum um eine Strecke von mehr als 1,5 cm beabstandet angeordnet ist. Ein Wicklungsabstand 16b zweier aufeinander folgender innerster Wicklungen des Spulenabschnitts 14b beträgt im Wesentlichen 1,3 mm. Ausgehend von dem inneren Spulenende 22b nehmen in dem Spulenabschnitt 14b Wicklungsabstände 16a der Induktionsheizleitung 12b in radialer Richtung 38b von innen nach außen hin sukzessive ab. Der Spulenabschnitt 14b ist als innerer Spulenabschnitt 14b ausgebildet. Die zweite Induktionsheizeinheit 10a umfasst einen weiteren Spulenabschnitt 26b, in dem Wicklungsabstände 16b der Induktionsheizleitung 12b im Wesentlichen gleich sind. Der weitere Spulenabschnitt 26b ist als äußerer Spulenabschnitt 26b ausgebildet. Im gezeigten Ausführungsbeispiel ist der weitere Spulenabschnitt 26b beabstandet gewickelt. Der Spulenabschnitt 14b ist in radialer Richtung 38b von dem weiteren Spulenabschnitt 26b umgeben.

Die zweite Induktionsheizeinheit 10b umfasst einen Übergangsbereich 42b, durch den der Spulenabschnitt 14b und der weitere Spulenabschnitt 26b getrennt sind. Der Übergangsbereich 42b weist eine dreiviertel Windung auf. Der Übergangsbereich 42b erstreckt sich bezüglich des Spulenzentrums 24b über einen Winkelabschnitt von im Wesentlichen 270°. Alternativ könnte der Übergangsbereich eine, einem Fachmann als sinnvoll erscheinende Erstreckung der Windung aufweisen.

Die zweite Induktionsheizeinheit 10b umfasst einen Spulenträger 18b, der Wicklungsabstände 16b der Induktionsheizleitung 12b definiert. Die Induktionsheizleitung 12b ist in montiertem Zustand über im Wesentlichen eine gesamte Länge der Induktionsheizleitung 12b auf dem Spulenträger 18b angeordnet. Der Spulenträger 18b ist als ein einstückiges Bauteil ausgebildet. Der Spulenträger 18b ist als ein massives Bauteil ausgebildet. Der Spulenträger 18b weist eine Führungseinheit 20b zu einer Führung der Spulenabschnitte 14b, 26b und des Übergangsbereichs 42b auf. Die Führungseinheit 20b ist zu einer Führung des Spulenabschnitts 14b, des weiteren Spulenabschnitts 26b und des Übergangsbereichs 42b vorgesehen. Die Führungseinheit 20b definiert Wicklungsabstände 16b der Induktionsheizleitung 12b. Die Führungseinheit 20b erstreckt sich ausgehend von dem Spulenzentrum 24b in radialer Richtung 38b. Die Führungseinheit 20b umgibt das Spulenzentrum 24b und definiert eine Führungsstrecke, entlang der die Induktionsheizleitung 12b geführt ist. Die Führungseinheit 20b weist eine im Wesentlichen kontinuierliche Führungsnut 40b auf, die die Führungsstrecke definiert. Ausgehend von dem Spulenzentrum 24b erstreckt sich die Führungsnut 40b im Wesentlichen spiralförmig um das Spulenzentrum 24b. Alternativ ist denkbar, dass der Spulenträger einen Trägerkern umfasst, in den die Führungseinheit mündet und um welchen der weitere, dicht gewickelte Spulenabschnitt gewickelt ist.

In einem Verfahren zur Herstellung der ersten Induktionsheizeinheit 10b wird die Induktionsheizleitung 12b zu der Spule gewickelt, wobei in dem Spulenabschnitt 14b Wicklungsabstände 16b der Induktionsheizleitung 12b von innen nach außen hin sukzessive abnehmen. Das Verfahren zur Herstellung der zweiten Induktionsheizeinheit 10b verläuft analog zu dem Verfahren zur Herstellung der ersten Induktionsheizeinheit 10a, weshalb auf eine Beschreibung verzichtet wird.

Die Beschreibung der ersten Induktionsheizeinheit und der zweiten Induktionsheizeinheit gilt in entsprechender Weise auch für die dritte und die vierte Induktionsheizeinheit. Die dritte und/oder die vierte Induktionsheizeinheit können analog zu der ersten und/oder der zweiten Induktionsheizeinheit aufgebaut sein. Alternativ können die dritte und/oder die vierte Induktionsheizeinheit durch Kombinationen von Merkmalen aus der ersten und/oder der zweiten Induktionsheizeinheit aufgebaut sein. Ebenfalls ist denkbar, dass eine der Induktionsheizeinheiten eine größere und/oder kleinere Anzahl an Spulenabschnitten und/oder Übergangsbereichen umfasst. Zudem können Wicklungsabstände zweier aufeinander folgender innerster Wicklungen des Spulenabschnitts und/oder eine Lage des inneren Spulenendes der Induktionsheizleitung relativ zu dem Spulenzentrum variieren.

Alternativ zu einem einstückig ausgebildeten Spulenträger ist denkbar, dass der Spulenträger zweiteilig und/oder mehrteilig ausgebildet ist. Beispielsweise könnte der Spulenträger aus miteinander verbundenen Streben und/oder Speichen ausgebildet sein. Ebenfalls denkbar ist, dass der Spulenabschnitt und der weitere Spulenabschnitt von Teilen des Spulenträgers getragen werden, die erst nach einer Wicklung des inneren Spulenabschnitts miteinander verbunden werden. Alternativ zu einem massiv ausgebildeten Spulenträger ist denkbar, dass der Spulenträger Hohlräume aufweist, die beispielsweise mittels Streben verbunden sein können, um insbesondere Gewicht zu sparen.

Grundsätzlich sind Ausgestaltungen mit mehr als einer Induktionsheizleitung und/oder mit mehr als einem Spulenzentrum denkbar. Beispielsweise könnte die Induktionsheizeinheit zumindest zwei Induktionsheizleitungen aufweisen, die insbesondere nebeneinander geführt und um ein insbesondere einziges Spulenzentrum gewickelt sein könnten. Alternativ könnten die zwei Induktionsheizleitungen jeweils zu einer Spule auf dem Spulenträger gewickelt sein, wobei jede der Induktionsheizleitungen jeweils um ein, insbesondere separates Spulenzentrum zu einer Spule auf dem Spulenträger gewickelt sein könnte.

Zudem ist denkbar, dass die erste Induktionsheizeinheit neben dem Spulenabschnitt einen weiteren Spulenabschnitt umfasst, wobei die Spulenabschnitte vorteilhaft durch einen Übergangsbereich voneinander getrennt sind und/oder direkt ineinander übergehen. Dadurch könnte beispielsweise eine für Kaffeemaschinen besonders geeignete Induktionsheizeinheit erreicht werden.

### Bezugszeichen

- 10: Induktionsheizeinheit
- 12: Induktionsheizleitung
- 14: Spulenabschnitt
- 16: Wicklungsabstand
- 18: Spulenträger
- 20: Führungseinheit
- 22: Inneres Spulenende
- 24: Spulenzentrum
- 26: Weiterer Spulenabschnitt
- 28: Induktionshausgerät
- 30: Grundkörper
- 32: Bedieneinheit
- 34: Steuereinheit
- 36: Äußeres Spulenende
- 38: Radiale Richtung
- 40: Führungsnut
- 42: Übergangsbereich

## Patentansprüche

1. Induktionsheizeinheit mit zumindest einer Induktionsheizleitung (12a-b), die zu einer Spule gewickelt ist, wobei Wicklungsabstände (16a-b) der zumindest einen Induktionsheizleitung (12a-b) in zumindest einem Spulenabschnitt (14a-b) von innen nach außen hin sukzessive, und zwar kontinuierlich, abnehmen, wobei der Spulenabschnitt (14a-b) ein Teilbereich der Spule ist, in welchem zumindest vier aufeinander folgende Wicklungen der Induktionsheizleitung (12a-b) angeordnet sind, und mit zumindest einem weiteren Spulenabschnitt (26b), in dem Wicklungsabstände (16a-b) der zumindest einen Induktionsheizleitung (12a-b) gleich sind, wobei der weitere Spulenabschnitt (26b) ein Teilbereich der Spule ist, in welchem zumindest vier aufeinander folgende Wicklungen der Induktionsheizleitung (12a-b) angeordnet sind.

2. Induktionsheizeinheit nach Anspruch 1, **dadurch gekennzeichnet, dass** Wicklungsabstände (16a-b) der zumindest einen Induktionsheizleitung (12a-b) in dem zumindest einen Spulenabschnitt (14a-b) von innen nach außen hin exponentiell abnehmen.

3. Induktionsheizeinheit nach einem der vorhergehenden Ansprüche, **dadurch gekennzeichnet, dass** ein Wicklungsabstand (16a-b) zweier aufeinander folgender innerster Wicklungen des zumindest einen Spulenabschnitts (14a-b) zumindest 0,5 mm beträgt.

4. Induktionsheizeinheit nach einem der vorhergehenden Ansprüche, **gekennzeichnet durch** zumindest einen Spulenträger (18a-c), der zumindest einen Wicklungsabstand (16a-b) der zumindest einen Induktionsheizleitung (12ab) definiert.

5. Induktionsheizeinheit nach Anspruch 4, **dadurch gekennzeichnet, dass** der zumindest eine Spulenträger (18a-b) eine Führungseinheit (20a-c) zu einer Führung zumindest des zumindest einen Spulenabschnitts (14a-b) aufweist.

6. Induktionsheizeinheit nach einem der vorhergehenden Ansprüche, **dadurch gekennzeichnet, dass** die zumindest eine Induktionsheizleitung (12a-b) ein inneres Spulenende (22a-b) aufweist, das zu einem Spulenzentrum (24a-b) um eine Strecke von mehr als 1 cm beabstandet angeordnet ist.

7. Induktionshausgerät, insbesondere Induktionskochfeld, mit zumindest einer Induktionsheizeinheit (10) nach einem der Ansprüche 1 bis 6.

8. Verfahren zur Herstellung zumindest einer Induktionsheizeinheit (10), insbesondere nach einem der Ansprüche 1 bis 6, bei dem eine Induktionsheizleitung (12a-b) zu einer Spule gewickelt wird, wobei in zumindest einem Spulenabschnitt (14a-b) Wicklungsabstände (16a-b) der zumindest einen Induktionsheizleitung (12a-b) von innen nach außen hin sukzessive, und zwar kontinuierlich, abnehmen und in zumindest einem weiteren Spulenabschnitt (26b) Wicklungsabstände (16a-b) der zumindest einen Induktionsheizleitung (12a-b) gleich sind, wobei der Spulenabschnitt (14a-b) ein Teilbereich der Spule ist, in welchem zumindest vier aufeinander folgende Wicklungen der Induktionsheizleitung (12a-b) angeordnet sind, und wobei der weitere Spulenabschnitt (26b) ein Teilbereich der Spule ist, in welchem zumindest vier aufeinanderfolgende Wicklungen der Induktionsheizleitung (12a-b) angeordnet sind.

## Claims

1. Induction heating unit having at least one induction heating pipe (12a-b), which is wound to form a coil, wherein winding distances (16a-b) of the at least one induction heating pipe (12a-b) in at least one coil section (14a-b) reduce successively, namely continuously, from the inside to the outside, wherein the coil section (14a-b) is a portion of the coil in which at least four consecutive windings of the induction heating pipe (12a-b) are arranged, and having at least one further coil section (26b), in which winding distances (16a-b) of the at least one induction heating pipe (12a-b) are identical, wherein the further coil section (26b) is a portion of the coil in which at least four consecutive windings of the induction heating pipe (12a-b) are arranged.

2. Induction heating unit according to claim 1, **characterised in that** winding distances (16a-b) of the at least one induction heating pipe (12a-b) in the at least one coil section (14a-b) reduce exponentially from the inside to the outside.

3. Induction heating unit according to one of the preceding claims, **characterised in that** a winding distance (16a-b) of two consecutive innermost windings of the at least one coil section (14a-b) amounts to at least 0.5 mm.

4. Induction heating unit according to one of the preceding claims, **characterised by** at least one coil carrier (18a-c), which defines at least one winding distance (16a-b) of the at least one induction heating pipe (12a-b).

5. Induction heating unit according to claim 4, **characterised in that** the at least one coil carrier (18a-b) has a guide unit (20a-c) for guiding at least the at least one coil section (14a-b).

6. Induction heating unit according to one of the preceding claims, **characterised in that** the at least one induction heating pipe (12a-b) has an inner coil end (22a-b), which is arranged at a distance from a coil centre (24a-b) of more than 1 cm.

7. Induction domestic appliance, in particular induction hob, having at least one induction heating unit (10) according to one of claims 1 to 6.

8. Method for producing at least one induction heating unit (10), in particular according to one of claims 1 to 6, in which an induction heating pipe (12a-b) is wound to form a coil, wherein in at least one coil section (14a-b) winding distances (16a-b) of the at least one induction heating pipe (12a-b) reduce successively, namely continuously, from the inside to the outside and in at least one further coil section (26b) winding distances (16a-b) of the at least one induction heating line (12a-b) are identical, wherein the coil section (14a-b) is a portion of the coil in which at least four consecutive windings of the induction heating pipe (12a-b) are arranged, and wherein the further coil section (26b) is a portion of the coil in which at least four consecutive windings of the induction heating pipe (12a-b) are arranged.

## Revendications

1. Unité de chauffage à induction avec au moins une ligne électrique de chauffage à induction (12a-b) qui est enroulée pour former une bobine, dans laquelle les distances entre enroulements (16a-b) de l'au moins une ligne électrique de chauffage à induction (12a-b) rétrécissent dans au moins une section de bobine (14a-b) de l'intérieur vers l'extérieur successivement et en continu, dans laquelle la section de bobine (14a-b) est une partie de la bobine dans laquelle au moins quatre enroulements successifs de la ligne électrique de chauffage à induction (12a-b) sont disposés et avec au moins une autre section de bobine (26b) dans laquelle les distances entre enroulements (16a-b) de l'au moins une ligne électrique de chauffage à induction (12a-b) sont identiques, dans laquelle l'autre section de bobine (26b) est une partie de la bobine dans laquelle au moins quatre enroulements successifs de la ligne électrique de chauffage à induction (12a-b) sont disposés.

2. Unité de chauffage à induction selon la revendication 1, **caractérisée en ce que** les distances entre enroulements (16a-b) de l'au moins une ligne électrique de chauffage à induction (12a-b) rétrécissent de manière exponentielle dans l'au moins une section de bobine (14a-b) de l'intérieur vers l'extérieur.

3. Unité de chauffage à induction selon l'une des revendications précédentes, **caractérisée en ce qu'**une distance entre enroulements (16a-b) de deux enroulements internes consécutifs de l'au moins une section de bobine (14a-b) s'élève à au moins 0,5 mm.

4. Unité de chauffage à induction selon l'une des revendications précédentes, **caractérisée par** au moins un support de bobine (18a-c) qui définit au moins une distance entre enroulements (16a-b) de l'au moins une ligne électrique de chauffage à induction (12a-b).

5. Unité de chauffage à induction selon la revendication 4, **caractérisée en ce que** l'au moins un support de bobine (18a-b) présente une unité de guidage (20a-c) par rapport à un guidage au moins de l'au moins une section de bobine (14a-b).

6. Unité de chauffage à induction selon l'une des revendications précédentes, **caractérisée en ce que** l'au moins une ligne électrique de chauffage à induction (12a-b) présente une extrémité de bobine interne (22a-b) qui est disposée à distance d'un centre de bobine (24a-b) sur plus de 1 cm.

7. Appareil électroménager à induction, en particulier plaque de cuisson à induction, avec au moins une unité de chauffage à induction (10) selon l'une des revendications 1 à 6.

8. Procédé destiné à la fabrication d'au moins une unité de chauffage à induction (10), en particulier selon l'une des revendications 1 à 6, dans lequel une ligne électrique de chauffage à induction (12a-b) est enroulée pour former une bobine, dans lequel dans au moins une section de bobine (14a-b) les distances entre enroulements (16a-b) de l'au moins une ligne électrique de chauffage à induction (12a-b) de l'intérieur vers l'extérieur successivement et en continu, et dans au moins une autre section de bobine (26b) les distances entre enroulements (16a-b) de l'au moins une ligne électrique de chauffage à induction (12a-b) sont identiques, dans lequel la section de bobine (14a-b) est une partie de la bobine dans laquelle au moins quatre enroulements successifs de la ligne électrique de chauffage à induction (12a-b) sont disposés, et dans lequel l'autre section de bobine (26b) est une partie de la bobine, dans laquelle au moins quatre enroulements successifs de la ligne électrique de chauffage à induction (12a-b) sont disposés.
